# EUROPEAN PATENT SPECIFICATION

(11) **EP 2 989 001 B1**
(45) Date of publication and mention of the grant of the patent: **15.01.2020**
(21) Application number: 13882697.9
(22) Date of filing: 25.04.2013
(51) Int. Cl.: B64C 3/20, B29C 70/30, B64C 1/12, B64C 3/18, B64C 3/26, B29C 70/34, B29D 99/00

(54) **A METHOD FOR PRODUCTION AND AN AIRFOIL WITH A TORSION-BOX TYPE SKIN COMPOSITE STRUCTURE**
HERSTELLUNGSVERFAHREN UND TRAGFLÄCHENPROFIL MIT EINER TORSIONSKASTENARTIGEN HAUTVERBUNDSTRUKTUR
PROCÉDÉ DE MANUFACTURE ET PLAN DE SUSTENTATION AVEC UNE STRUCTURE COMPOSITE DE REVÊTEMENT DE TYPE CAISSON DE TORSION

(43) Date of publication of application: 02.03.2016
(73) Proprietor: SAAB AB, 581 88 Linköping (SE)
(72) Inventor: GUSTAVSSON, Stefan, 585 91 Linköping (SE); BROFELDT, Pär, 583 32 Linköping (SE); FÄRNSTRÖM, Lars, 582 24 Linköping (SE)
(74) Representative: Zacco Sweden AB
(86) International application number: PCT/SE2013/050463
(87) International publication number: WO 2014/175799

(56) References cited:
- US-A1- 2004 051 214
- US-A1- 2005 178 083
- US-A1- 2007 175 171
- US-A1- 2008 283 675
- US-A1- 2008 283 675
- US-A1- 2009 320 292
- US-A1- 2009 320 398
- US-A1- 2010 272 954
- US-A1- 2010 272 954
- US-A1- 2011 139 932
- US-A1- 2011 139 932
- US-A1- 2011 315 824
- US-A1- 2012 132 748
- US-B1- 6 743 504

## Description

### TECHNICAL FIELD

The present invention regards a method for manufacture of an airfoil of a torsion-box type skin composite structure according to claim 1 and regards an airfoil of a torsion-box type skin composite structure according to the preamble of claim 7. The invention also regards a data medium storing program comprising a program code, which program when run on a computer executes the method according to the invention. The invention also regards a production line per se adapted to make use of the data medium storing program for executing the method.

The invention relates to the aircraft industry and to aircraft service engineering. The invention is not limited thereto, but could also be related to activities regarding maintenance of commercial aircraft as well.

### BACKGROUND ART

Current aerodynamic technologies for aircraft wings, vertical/horizontal stabilizers, fins, nacelles etc., use composite or sheet metal skins and make use of different solutions for coupling the aircraft skin to a main sub-structure.

The aircraft skin may be coupled or bond to the sub-structure, or part of the sub-structure, by means of rib feet etc. In some cases bolts are used which extend through bore holes of the wing skin and further to brackets, which are secured to the sub-structure for holding the skin to the sub-structure. In service and repair, such bracket is easy to exchange to a new bracket by releasing the bolts extending through the aircraft skin and bracket. However, such bolt arrangement through the wing skin means that bolt heads disturbe the laminar flow over the aircraft skin whereby drag is produced increasing the aircraft fuel consumption.

There are large shear and peel loads on said rib feet. In some rare cases micro cracks may appear in said rib feet caused by heavy loads on the skin structure. Such damages are critical in view of flight safety and may also involve complex repair process.

US 1212/0094077 discloses a aircraft component having a skin stiffened with stringers. The skin and stringers are co-cured together and thereby joined to each other. Ribs intersect the stringers and the latter passing so called "mouseholes" of the ribs. Local flarings of the stringers are used to join the skin to the ribs.

US2012/0132748A1 describes a skin panel having an outer surface of a skin panel forming an external face and having an inner panel spaced apart from the skin panel. Stringers are located within an internal cavity formed by the skin panel and the inner panel.

US2008283675A1 shows a rib structure of a torsion box. The structure has upper and lower skin with respective upper and lower stringers attached to the skins and spars running along the skins. A rib center element of a rib is mounted between the upper and lower stringers. The rib center element constitutes the attachment of the rib to the spars and provides support for vertical stiffeners. The rib center elements are not attached to the skins directly but by means of

US2010272954A1 describes a structure having a skin and stringers attached to the inner side of the skin. A rib support is attached to the stringer for holding the rib.

US2011139932A1 describes a structure having a skin and hollow stringers. A rib is directly coupled to the hollow stringers.

US2011315824A1 describes a composite structure having a plurality of integrally formed stiffeners applied onto a skin. The stiffeners are coupled to each other via connecting nodes.

US 2004/051214 shows a method for manufacture of a skin panel being co-cured with ribs and spars.

US 2007/175171 describes a skin structure with U-shaped stiffening members produced by a co-curing process.

For rigid co-bonding the skin to the ribs, rivets or bolts may be used according to prior art techniques. The outer surface (aerodynamic surface) of the skin (wing skin, fuselage skin, stabilizer skin, fin skin, nacelle skin etc.) will thus exhibit rivet or bolt heads being exposed to the airflow. The heads will disurb the natural flow of air flowing over the outer surface when the component is used. There is thus a need to provide a coupling between an aircraft skin and a sub-structure, i.e. provide a torsion-box type skin composite structure, which technical solution still involves strength, permits cost-effective repair and promotes laminar flow over aircraft skin and which at the same time is cost-effective to manufacture.

An object of the present invention is to provide a semi-autimatic or automatic production of an airfoil with a torsion-box type aircraft skin structure, which skin structure is ready to mount on a sub-structure or part thereof.

An object is to provide an airfoil with a torsion-box type aircraft structure that is cost-effective to use and produce, and which torsion-box type aircraft structure having a low service cost for repair.

An object is to provide an aircraft, which has low fuel consumption, and therefore can be regarded as a green technology.

### SUMMARY OF THE INVENTION

This has been achieved by the method defined by the features of claim 1.

In such way is achieved an airfoil with a torsion-box type skin composite structure, which for service and maintenance cost-effectiveness can be removed from the main structure. By the method step of positioning and co-curing the stiffener lay-up and the fastener lay-up toghether with the skin-lay up there will be provided a torsion-box type skin composite structure, which is mountable to a main sub-structure (such as ribs of an aircraft wing) via the fastening elements (such as a rib feet). In such way is at the same time achieved a smooth outer surface of the torsion-box type skin composite structure, which outer surface serves as an aerodynamic surface when the structure (such as a wing) moves through the air. By means of the coupling members (such as T-coupling members) a rigid joint between the fastener element and the skin component is achieved. The coupling members will thus promote that the fastener element is rigidly joined to the skin component by means of coupling the fastener element to the stiffener element (such as a stringer) via said coupling members and thereby eqalize load stresses acting on the fastener element.

In such way is also an efficient aircraft manufacture achieved in view of cost-effective production of wings, stabilizers, control surfaces etc. An ATL (automatic tape laying) apparatus may be used for providing the skin lay-ups onto the forming tool and onto the box tools. Preferably, the forming tool for forming the skin component comprises a male forming tool and a female forming tool. The female forming tool is preferably provided with a smooth forming surface for achieving a smooth outer surface (aerodynamic surface) of the skin component. The smooth forming surface may comprise composite material including nanofiber-like reinforcement material (e.g. carbon nano tubes (CNTs)) thus strengthening the forming surface and thereby will form extremely smooth outer surface of the skin component.

Box tools are preferably adapted to be used in a so called hot drape forming procedure, where a stretchable membrane is used to form the lay-up over the box tool. The hot drape procedure can also be performed semi-automatic or automatic.

Suitably, the lay-ups used for the fastener element (rib feet) and stiffener element (stringers) are formed into L-shaped profile. The box tools are used for forming two mirror L-profiles, which in turn form a U-profile. Preferably, the U-profile formed by the box tool will contact an adjacent U-profile (with parallel flanges) formed over an adjacent box tool, wherein the flanges of respective adjacent U-profile bonded together will constitute a fastening web of the fastener element (and correspondingly a stiffening web of the stiffening element), wherein the stiffening web is part of a T-profile. The coupling member may be of any shape and form. The essential feature is that it connects the rib foot and the stringer together for balancing the peel and shear loads acting upon the interface between co-cured respective rib foot and skin composite. The stringer is also co-cured to the skin component during the same co-curing procedure and thereby will the coupling members serve as a strengthening means.

Preferably, there is two coupling members mounted to one fastener element (e.g. rib foot) in such way that the fastener element is rigidly held between two adjacent stiffener elements (e.g. stringers) by said coupling members. The opposite sides of each stiffener element (seen in a direction chord wise from the fastener element) are thus joined to the coupling members, which in turn is joined to said fastener element. In such way a chain (train) of coupling members and fastener elements is provided, which chain extends via the stiffener elements, and promotes a rigid and strong bond of the fastener elements to the skin component. Suitably, the fastener elements are bolted to the main sub-structure (e.g. ribs). That is, each rib will be fixedly bolted to a rigid assembly od such a chain of coupling members and fastener elements. This promotes that peel stresses acting at one edge area (seen in longitudinal direction of the fastener element) (e.g. rib foot flange) (the opposite edge area of the fastener element is subject for compression) can be balanced. Thus, the coupling members, each of which being connected to the fastener element edge area and to the main sub-structure (e.g. rib), will act as a chain of elements taking up the torque acting on the fastener element.

The shear forces acting on the fastener element can thus be balanced as the fastener element is held rigidly in place by means of the coupling members and strengthening the joint with the skin component.

Suitably, the step of positioning the stiffener and the fastener lay-up is performed after forming said stiffener and fastener lay-ups over a box tool.

Thereby is achieved that a fastener and stiffener lay-up will be provided, which lay-ups constitute an integral lay-up.

Preferably, the forming of a fastener lay-up is performed over the box tool prior the forming of the stiffener lay-up over said box tool including forming partially over said fastener lay-up.

Suitably, the forming of the stiffener lay-up is performed over a serie of box tools over which are formed fastener lay-ups.

Preferably, the box tools are configured to fit in a module system and being arranged with fixing members for mounting the box tools to each other.

Suitably, the fixing members are bolts or clamps or controllable taps for automatic mounting of the box tools to each other.

Alternatively, the cure tool is an out-of autoclave apparatus.

Suitably, the box tools is made of aluminum or other hard metal material. The box tool may also comprise a composite material.

Preferably, the forming of the fastener lay-ups and the stiffener lay-up is performed by a robot apparatus.

Suitably, the positioning of the stiffener and the fastener lay-up is made by a robot apparatus.

Preferably, the step of positioning the stiffener and fastener lay-up to the skin lay-up is made after the application of an adhesive.

In such way is achieved that a filling between rib-foot lay-up and stringer lay-up is achieved for strengthening the structure.

There is also achieved that a filling is provided between the stiffener lay-up and the skin lay-up.

Suitably, adhesive is applied between stiffener lay-up and fastener lay-up and also between stiffener lay-up and skin lay-up. I.e. adhesive is applied beween both stringer flanges and skin and between rib feet flanges and stringer flanges lay-up.

Preferably, such application is performed by an automatic procedure.

The bonding between the elements is preferably made with an adhesive comprising transverse oriented fibers or fiber-like elements or other suitable reinforcement elements (such as CNTs).

The use of composite materials will make it possible to design a structural profile, such as wing box or wing profile or winglet profile, in an integrated way allowing co-curing of skin panels with some parts of the substructure (e.g. spares, spar caps, rib feet, stringers etc.) without the use of mechanical fasteners.

Preferably, the cure tool is an injection tool (RTM-resin transfer moulding).

In such way is achieved an very strong bonding between the skin lay-up and the stringer lay-up, and between the stringer lay-up and the rib feet lay-up.

The lay-up material being used to form the rib feet, skin component, T-couplings, stringers may be of any suitable resin pre-impregnated fibre material.

Preferably, the material used for lay-ups can be pre-impregnated woven fabric.

Alternatively, the material which is used can be dry woven fabric, in a second step injected or impregnated with resin.

Suitably, the material used can be dry woven fabric interleaved with resin film. The lay-ups may be based on pre-preg tapes such as unidirectional pre-impregnated fiber plies, wherein the fibers being of woven carbon fiber pre-preg fabrics, Kevlar, spectra pre-preg tapes and fabrics etc.

Suitably, the method according to any of the preceding claims, wherein the step of co-curing the integrated lay-up is made in an autoclave.

In such way is achieved that a torsion-box type skin composite structure can be made in one curing cycle which is cost-effective.

Preferably, prior the step of co-curing the intergral lay-up, it is subject to a bagging procedure for eliminating eventual air pockets within the lay-up.

Suitably, the method according to any of the preceding claims, wherein the step of mounting the coupling member to the stiffener element and the fastener element comprises the application of an adhesive between the elements and the coupling member.

The mounting may alternatively use the application of bolts (fastening member). Suitably, the mounting may use a combination of bolts and adhesive.

In such way is achieved that the coupling member is rigidly coupled to the stiffening element and the fastener element. Thereby is provided that eventual load caused by skin component movement relative the main sub-structure (such as ribs of an aircraft wing) will be balanced and absorbed by the fastener element (e.g. rib foot) rigidly coupled to the stiffener element (e.g. adjacent stringers) by means of said coupling member.

Preferably, the fastening member is a set of bolts, the bolts having extensions parallel with each other and parallel with the plane of the skin component.

In such way the bolts can bond the main sub-structure (e.g. wing rib) rib to the fastener element (e.g. rib foot). When the bolts are removed, the skin can be removed from the ribs.

This is also solved by an airfoil with a torsion-box type skin composite structure as defined in the introduction, wherein the structure is characterized by the features of the characterizing part of claim 7.

This promotes that peel stresses acting at one edge area (seen in longitudinal direction of the fastener element) (rib foot flange) (the opposite edge area of the fastener element is subject for compression) can be balanced. It is also achieved that a smooth aerodynamic surface is achieved due to the lack of rivets through the skin component.

Suitably, the coupling member comprises an adhesive and/or a fastening member.

In such way is achieved that the connection between stringer and rib foot is rigid, which strengthen the rib foot joint with the skin (or flanges of the stringer laminate).

Thereby is achieved an increase in strength and thus at the same time a decrease in stress concentration between skin and rib feet (by the inventive chord wise shear connection).

Thereby is achieved that an cost-effective mounting or demounting of the skin component can be performed relatively the main sub-structure.

Suitably, the coupling member exhibits a web part and a flange part extending orthogonally over the web part.

Thereby is achieved that the flange part (corresponding horizontal upper line of the letter "T") can be attached to the stringer (face to face) and the web part can be attached to the rib foot (face to face). The rib foot will thereby be strengthened, wherein the shear and peel forces acting on the contact area between skin component and flanges of the rib foot are balanced.

Preferably, the web part comprises a bore hole for mounting a fastening member (e.g. bolt) through the bore hole to rigidly connect the fastener element (e.g. rib foot) to to the main sub-structure (e.g. rib) by rigidly connection of the flange part to the stiffener element.

Thereby is achieved a smooth outer surface of the torsion-box type skin composite structure since no bolt heads are exposed in the aerodynamic surface. By means of the coupling members (such as T-coupling members) a rigid joint between the fastener element and the skin component is achieved. The coupling members will thus promote that the fastener element is rigidly joined to the skin component by means of coupling the fastener element to the stiffener element (such as a stringer) and will eqalize load stresses acting on the fastener element.

This is also solved by an aircraft wing claimed in claim 12, the wing comprising an airfoil as defined in the introduction, characterized by the features of any of claims 7-11, wherein the torsion-box type skin composite structure is bolted to a rib.

In such a way an aircraft wing is achieved which comprises a smooth outer surface at the same time as the bonding of the wing skin to the ribs of the wing is strengthened.

In such way an effective production of the inventive structure is achieved, which is cost-effective and time saving.

A program product can be used for a plurality of production lines.

The apparatus for providing the forming tool can be an automatic machining apparatus CNC adapted to machine the forming tool. The apparatus for providing a skin lay-up and/or the stiffener lay-up and/or the fastener lay-up onto the forming tool may be an ATL apparatus operated semi-automatic or automatic. The apparatus for positioning the stiffener lay-up and the fastener lay-up to the skin lay-up forming an integral skin lay-up can be a robot apparatus cooperating with an automatic forming tool for forming fastener lay-ups one by one and stiffener lay-ups one by one and thereafter automatically or semi-automatically arranging the lay-ups on a box tool modular set up. The apparatus for co-curing the integral skin lay-up may be an autoclave into which the integral skin lay-up automatically or semi-automatically is inserted. Thereafter the integral skin lay-up being demoulded, wherein the box tools are removed from the skin lay-up. This can be performed by a robot arm connected to a gripping device gripping the box tools. The apparatus for mounting a coupling member to the co-cured stiffener and fastener elements may preferably be a an automatic or semi-automatic apparatus, which can be programed to perform the mounting of coupling members to the structure. The coupling members can be bolted to the fastener elements (e.g. rib feet) automatically or semi-automatically by e.g. orbital drilling pilot holes through the coupling and fastener elements after bonding them together by means of adhesive. The bolts extending through the coupling members and the fastener element for each section are preferably removed prior mounting of the torsion-box type skin composite structure to the main sub-structure (such as ribs of a wing sub-structure). Thereafter, the pilot holes are enlarged by drilling with greater diameter than pilot holes and the enlargement is performed through also the ribs of the main sub-structure. Thereafter bolts having correspondingly greater diameter is drawn through the fastener and coupling members and the main sub-structure for tightening the main sub-structure (e.g. ribs) to the fastener elements (e.g. rib feet).

The inventive solutions achieved by the invention can be taken into account for all claim categories herein disclosed.

The foregoing and other objects and advantages of the present invention will be apparent to those skilled in the art, in view of the following detailed description, taken in conjunction with the appended claims and the accompanying drawings.

### BRIEF DESCRIPTION OF THE DRAWINGS

The present invention will now be described by way of examples with references to the accompanying schematic drawings, of which:
Fig. 1 illustrates a torsion-box type skin composite structure of an aircraft wing according to one aspect of the present invention;
Figs. 2a to 2e illustrate method steps and manufacture tools of a production line according to one aspect;
Figs. 3a to 3e illustrate a modular system of box tools according to one aspect;
Fig. 4 illustrates a cross-section of a coupling member according to one aspect of the present invention;
Figs. 5a to 5b illustrate one aspect of the present invention;
Fig. 6 illustrates a further aspect of the present invention;
Figs. 7a to 7c illustrate the principle of the present invention, where Fig. 7a is prior art;
Figs. 8a to 8c illustrate flowcharts showing methods according to different aspects of the present invention;
Fig. 9 illustrates a computer device according to one aspect of the invention; and
Fig. 10 illustrates an aircraft comprising the structure accordning to one aspect of the present invention.

### DETAILED DESCRIPTION

Hereinafter, embodiments of the present invention will be described in detail with reference to the accompanying drawings, wherein for the sake of clarity and understanding of the invention some details of no importance are deleted from the drawings.

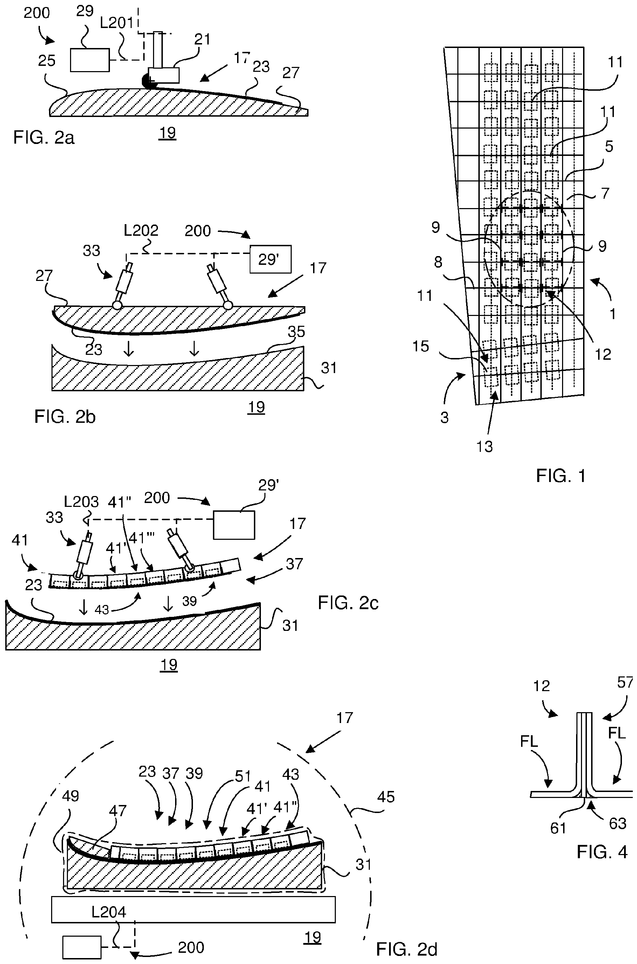

Fig. 1 illustrates a torsion-box type skin composite structure 1 of a wing 3, which is mountable to a main sub-structure 5, such as wing ribs 8. The torsion-box type skin composite structure 1 comprises a skin component 7 which is co-cured with stiffener elements 9 (here stringers) and fastener elements 11 (here a rib feet), thereby forming an integral wing 3 skin. Flanges 13 of the stiffener elements 9 and flanges 15 of the fastener elements 11 exhibit a thickness, which contributes to the thickness of the wing 3 skin. The stiffener elements 9 extend spanwise and the fastener elements 11 extend chordwise or correspondingly in a proper way with the extension of the wing ribs 8. The wing ribs 8 of the main sub-structure 5 are bolted to the fastener elements 11 for holding the torsion-box type skin composite structure 1 (skin component) to the main sub-structure 5. Coupling members 12 are connected to the stiffener 9 and fastener elements 11 for balancing loads.

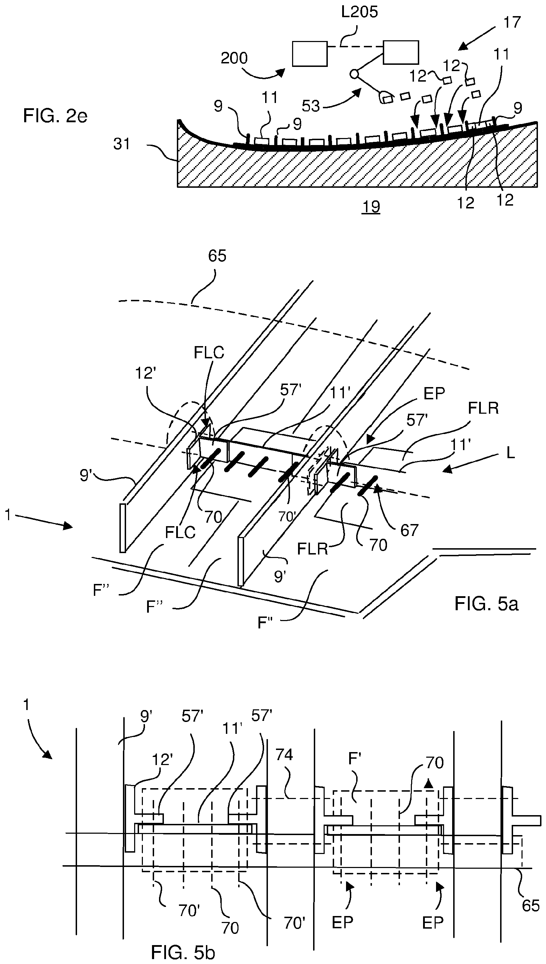

Fig. 2a to 2e illustrate method steps and manufacture tools 17 of a production line 19 according to one aspect of the present invention. Fig. 2a illustrates an ATL (automatic tape laying) apparatus 21, which is semi-automatic or automatic operated for the application of a skin lay-up 23 onto a forming surface 25 of a male forming tool 27. The skin lay-up 23 comprises resin pre-impregnated fiber plies (not shown) not yet being cured. The plies are laid with different directions for achieving a proper strength of the finished laminate. A control processor unit 29 of a control unit 200 is provided to operate the ATL apparatus 21. Fig. 2b illustrates the application of the male tool 27 comprising the skin lay-up 23 (after being turned up-side down) in position over a female forming tool 31. A set of prolongated actuators 33 (such as hydrauls) are operated by a first control 29' unit to move the skin lay-up 23 into position onto a forming surface 35 of the female forming tool 31. Fig. 2c illustrates the hydrauls operated to position a stiffener lay-up 37 (for providing a stiffener element 9) and fastener lay-up 39 of a box tool module 41 onto the skin lay-up 23 inner side thereby forming an integral skin lay-up 43 comprising stiffener 37 and fastener lay-ups 39 (for providing fastener elements 11, see Fig. 1). The first control unit 29' operates also this procedure. In Fig. 2d is illustrated an integral lay-up 43 ready for an automatic insertion into an autoclave tool 45 for co-curing. The integral lay-up 43 is assembled together with sub-spar tools 47, blade lay-ups (not shown) of pre-pregs inserted within stiffener 37 and fastener lay-ups 39, noodles (not shown) and other suitable components constituting an assembly 51. The assembly 51 and female tool 31 have been bagged with a vacuum bag 49, wherein air suction is performed for sucking eventual air from the pre-preg ply interfaces, thus compacting the lay-ups 23, 37, 39 and preparing the assembly 51 for a proper co-curing. After the bagging procedure, the assembly 51 is inserted into the autoclave 45. The autoclave 45 provides that the integral lay-up 43 co-cures in hot air temperature and under high over pressure. Thereafter, the female tool 31 with the co-cured laminate is removed from the autoclave 45 for demoulding, wherein box tools 41', 41", 41'" are removed from the co-cured laminate. Fig. 2e illustrates a mounting procedure, wherein a robot arm 53 mounts into position a pair of coupling members 12 (here T-profile connectors) to each fastener element 11 (here rib foot), wherein each coupling member 12 also connects to respective stiffener element 9 (here stringer). Before the positioning of each coupling member 12 into position between the fastener element 11 and the stiffener element 9, contact areas adapted for contact between the coupling member 12 to respective element 9, 11 is applied with an adhesive. The contact area of the coupling member 12 brought into contact with the fastener element 11 is preferably applied with an adhesive. After curing the torsion-box type skin composite structure 1 is moved to a manufacture station (not shown) where an automatic inspection is performed of the structure. At the same manufacture station a machining is performed for trimming, drilling etc. of the composite laminate. Bore holes (not shown) are drilled by an automatic drilling machine (preferably orbital drilling) through the fastener elements 11 in exposed areas of the fastener elements 11 and also integral through both the fastener elements 11 and the coupling members 12, which bore holes are adapted to recieve bolts (not shown) for fastening the structure 1 to the main sub-structure 5.

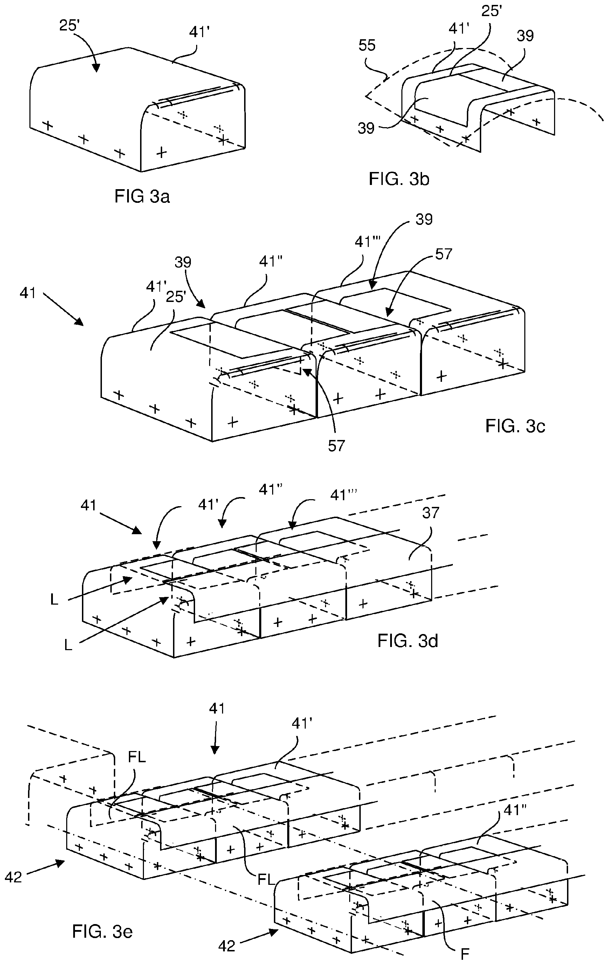

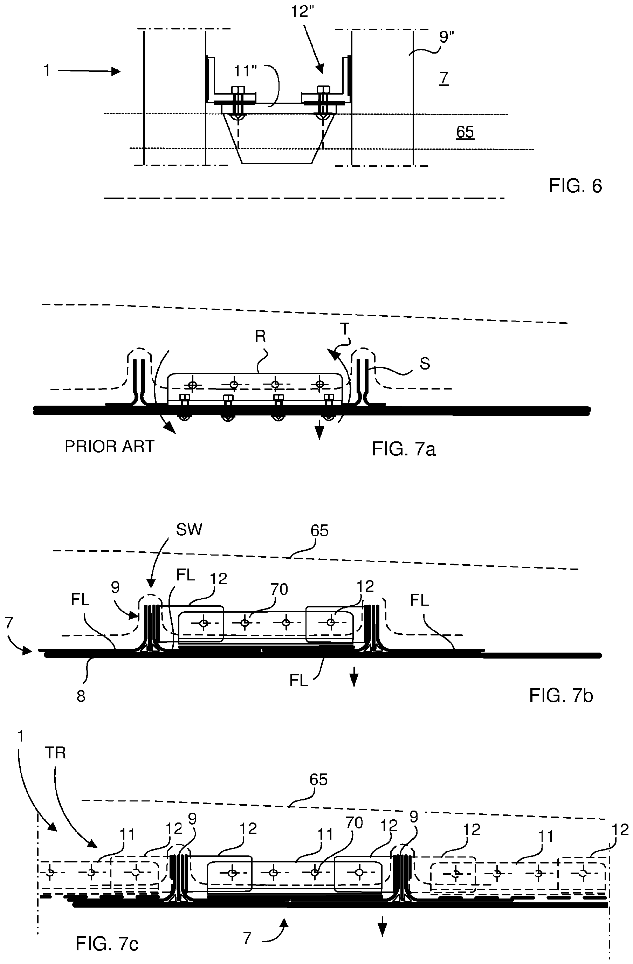

Figs. 3a to 3f illustrate a box tool 41' of a modular system 41 of box tools 41', 41" according to one aspect of the present invention. The box tool 41' shown in Fig. 3a comprises a forming surface 25' on to which a lay-up (not shown) is applied. The lay-up comprises a plurality of pre-preg plies, each having a fiber orientation tailor made for each application. The box tool 41' is manufactured semi-automatically or automatically by means of an automatic miller machine coupled to a central control unit (not shown). The central control unit is in turn coupled to a designer (not shown) personal computer PC (not shown) adapted for the design of a torsion-box type skin composite structure 1. In Fig. 3b is shown the lay-up 39 laid in the shape of two separate L-profiles being formed over the forming surface 25' of the box tool 41'. A forming membrane 55 of a hot drapeforming apparatus forms the lay-up 39 over the forming surface 25'. Fig. 3c illustrates a plurality of box tools 41', 41", 41''' being joined together and being a part of the modular box tool system 41. The respective box tool is secured to the other and flanges 57 of the L-profiles will abut each other forming a web of a T-shaped lay-up. Each T-shaped lay-up will form a fastener lay-up 39 having a web portion 57 constituting (after co-curing) a rib fastening portion. Fig. 3d illustrate the part of the modular box tool system 41, wherein a further lay-up being laid over the box tools 41', 41", 41''' in series along the prolongation of the modular box tool 41. The lay-ups will each be formed with L-profiles L and every modular box tool 41 comprises two L-profiles. The lay-ups are in this embodiment constituting parts of stiffener lay-ups 37 used to stiffening the skin component 7. Fig. 3e illustrates a part of the modular box tool 41, wherein prolongated box tools 42 in sereis is secured to a parallely arranged set of box tools 42 in series. The respective set of box tools 42 is secured to the other and flanges FL of the L-profiles will abut each other forming a web having a T-shaped lay-up. Each T-shaped lay-up will form a stiffener lay-up 37 having a web portion constituting (after co-curing) a stiffening web SW, which will also serve as a coupling portion for connection to a rib fastening portion (not shown) via the coupling member 12 (see Fig. 7b).

Fig. 4 illustrates a coupling member 12 according to one aspect of the present invention. The coupling member 12 is shaped with a T-form. It is two L-shaped lay-ups which has been co-cured or bond to each other in a suitable way (back to back mirror wise). A blade 61 of pre-preg has been sandwiched between the flanges of the L-shaped lay-ups before curing. A noodle set 63 being cut from pre-preg has been arranged in cavities formed by the radius of the L-shape, which noodle 63 will serve as reinforcement filler of the structure 1. The flanges and the blade will constitute a web 57' of the coupling member 12. The web 57' is connected to the fastener element 11. The co-linar webs of the L-shaped lay-ups will constitute two flanges FL of the coupling member 12. Each flange FL is connected to the stiffening element 9.

Figs. 5a to 5b illustrate one aspect of the present invention. Fig. 5a illustrates in perspective the interior of a torsion-box type skin composite structure 1. The fastener element is a rib foot 11' connected to web 57' of the T-coupling 12'. The flanges FLC are adhered to the respective stringer 9'. The rib foot 11' is attached to a respective T-coupling 12'. The rib foot 11' comprises two flanges FLR which are co-cured with the flanges F" of the stringers 9'. The edges of the flanges F" of the stringers 9' are abut to each other (or at a small distance creating a small gap, which is filled with resin). A wing rib 65, the countour of which is shown with dotted line, is in position to be fastened to the respective rib foot 11'. Bore holes 67 extending through the rib foot 11' and through both the rib foot 11' and the T-coupling's 12' web 57' are provided. Bolts 70 are to be mounted through the bore holes 67 for holding the torsion-box type skin composite structure 1 to the wing ribs 65 (as part of the main sub-structure) of the wing. In Fig. 5b is shown the structure 1 in a view from above. Four bolts 70, 70' are inserted through the rib foot 11' and the wing rib 65 for each section. Two bolts 70' of said four bolts extend through the respective end portion EP of the rib foot 11' and also the web 57' of the T-coupling 12'.

Fig. 6 illustrates a further aspect of the present invention. The coupling member 12" is L-shaped and made of metal. Two rivets extend through the respective web portion of the coupling member and through the rib foot 11". The flanges of the coupling members 12" are adhered to the stringers 9" by means of epoxy resin.

Fig. 7a illustrates prior art. The skin is made of a thick aluminium sheet metal. Stringers S made of composite have been attached to the skin inner side. Rib foot R secured to the wing rib is riveted to the skin. During use of the prior art skin a tension occur forcing the skin away within an area corresponding to one end portion of the rib foot. This means that a torque T will act on the joint between the rib foot and the skin wherein one end portion will be subject to tensile force and the other end portion will be subject to compression force. It means that peel forces will occur on a composite skin and rib foot joint. Such torque is thus critical.

Fig. 7b illustrates one aspect of the invention. The skin 7 comprises a co-cured composite substrate skin 8 ply. Onto the substrate skin 8 ply are the flanges FL of the stringers 9 applied. The flanges FL extend to such extent that they abut each other at their edges so that the substrate skin 8 ply fully is covered by the flanges FL. In such way the stringers 9 are integrated with the substrate skin 7 at the same time as the flanges of the stringers 9 will increase the skin 7 strength. Such integrated stringer 9 flange and skin substrate 8 will save weight, which is important for aircraft industry. Prior art use the stringer flanges just to connect the stringer to a skin already determined with a thickness. The present invention on the contrary with integrated stringer flanges and skin substrate (co-cured) implies less fuel consumption due to low weight structure, which is environmental friendly.

Fig. 7c illustrates the principle of arranging a train (chain) TR of coupling members 12 and rib feet 11 in a line extending over the skin 7 inside surface in chord wise direction. Such train TR of coupling members 12 and rib feet 11, interlocked by also the stringer 9 material (thickness) seen chord wise and transverse to the longitudinal direction of the stringer 9, will promote a rigidity which will gain the strength of the structure 1 regarding peel forces and shear forces and other loads.

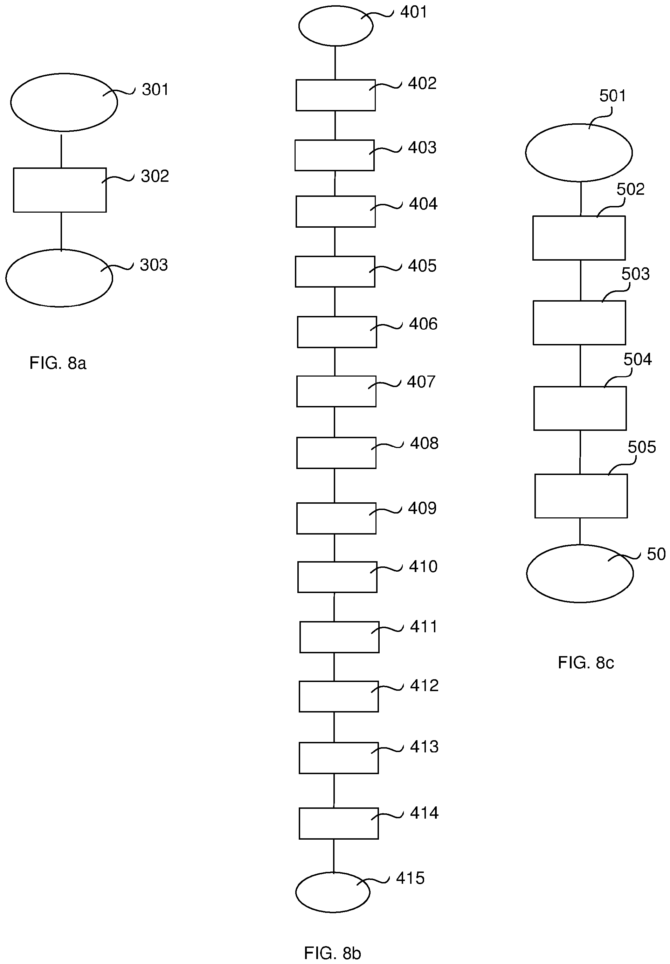

Fig. 8a illustrates a flow chart of the method for manufacture of a torsion-box type skin composite structure 1, according to one aspect of the invention. The method starts in Step 301. In Step 302 is provided a method for manufacture of the composite structure 1, mountable on a main sub-structure 5. In Step 303 the method fulfilled. The step 302 thus comprises the steps of; providing a forming tool, providing a skin lay-up onto the forming tool, positioning a stiffener lay-up and a fastener lay-up to the skin lay-up forming an integrated lay-up, co-curing the integral lay-up, and mounting a coupling member 12 to the stiffener element and the fastener element.

Fig. 8b illustrates a flow chart of the method for manufacture of a torsion-box type skin composite structure 1, according to one aspect o the invention. Step 401 corresponds to a starting (start-up) of a production line. Step 402 defines the providing of a curved male and a corresponding female skin forming tool. Step 403 defines the application of a lay-up onto the male skin forming tool for forming an inner surface. Step 404 defines the application of the skin lay-up on the female skin forming tool for forming an outer surface of the skin lay-up by introducing male skin forming tool carrying skin lay-up into female skin forming tool. Step 405 defines the removal of the male skin forming tool from the skin lay-up applied to the female skin forming tool. Step 406 defines the introduction of a module box forming tool, on which a second lay-up has been pre-formed, into and in proper position relative the female skin forming tool in such way that the second lay-up contacts the skin lay-up. Step 407 defines the sealing of the female skin forming tool and introduced module box forming tool positioning the skin lay-up and the second lay-up within a vacuum bag for evacuation. Step 408 defines the bagging of the female skin forming tool and introduced module box forming tool comprising the lay-ups within a vacuum bag for evacuation. Step 409 defines a co-curing of the lay-ups in an autoclave. Step 410 defines a demoulding procedure, wherein the box tools are removed from the co-cured laminate. Step 411 defines a machining procedure wherein burr and edges of the structure are trimmed and smoothened. Step 412 defines the mounting of coupling members to the structure. Step 413 defines the application of a primer onto the inner surface of the structure. Step 414 defines a wrapping of the finished article for protection and being transported to a storage facility. Step 415 defines a stop in production line. Alternatively, the finished article can be transported direct to a work-shop for mounting the structure 1 to the main sub-structure, wherein the fastening elements (rib feet) are bonded to the main sub-structure (ribs).

Fig. 8c illustrates a flow chart of the method for manufacture of a torsion-box type skin composite structure, according to one aspect o the invention. Step 501 defines a starting (start-up) of a production line. Step 502 defines an introduction of a module box forming tool, onto which a sub-structure lay-up has been pre-formed, into the female skin forming tool in such way that the sub-structure lay-up contacts the skin lay-up, the sub-structure lay-up comprises first partial lay-up for stiffener and second partial lay-up for rib foot. Step 503 defines co-curing of the skin lay-up and the second lay-up. Step 504 defines mounting of T-couplings 12 between achieved longitudinal stiffener and rib feet for strengthening the connection between the skin composite and the rib feet. In such way is achieved a strong torsion-box type skin composite structure, without having any bolt heads protruding from the skin outer surface.

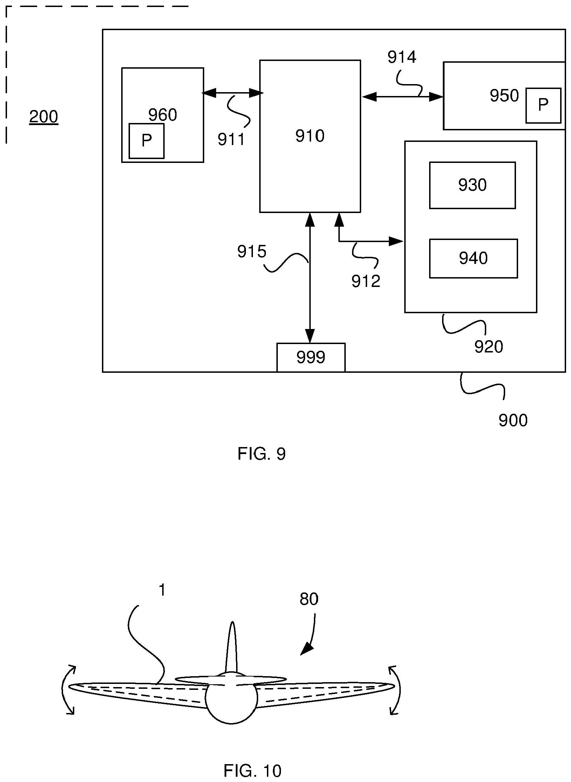

Fig. 9 illustrates a device 900 according to one aspect of the invention. The control unit 200 of the production line described in Fig. 2a to 2e may comprise the device 900. The device 900 comprises a non-volatile memory NVM 920 which is a computer memory that can retain stored information even when the computer is not powered. The device 900 further comprises a processing unit 910 and a read/write memory 950. The NVM 920 comprises a first memory unit 930. A computer program (which can be of any type suitable for any operational data base) is stored in the first memory unit 930 for controlling the functionality of the device 900 as a part of the production line 19.

Furthermore, the device 900 comprises a bus controller (not shown), a serial communication port (not shown) providing a physical interface through which information transfers separately in two directions. The device 900 also comprises any suitable type of I/O module (not shown) providing input/output signal transfer, an A/D converter (not shown) for converting continuously varying signals from detectors (not shown) and other monitoring units (not shown) of the production line into binary code suitable for the computer.

The device 900 also comprises an input/output unit (not shown) for adaption to time and date. The device 900 also comprises an event counter (not shown) for counting the number of event multiples that occur from independent events in the production line 19. Furthermore the device 900 includes interrupt units (not shown) associated with the computer for providing a multitasking performance and real time computing in said production line. The NVM 920 also includes a second memory unit 940 for external controlled operation.

A data medium storing program P comprising driver routines adapted for drivers (not shown) and provided for operating the device 900 for performing the present method described herein. The data medium storing program P comprises routines for causing in a production line 19 an automatic or semi-automatic manufacture of a torsion-box type skin composite structure 1 mountable to a main sub-structure 5. The data medium storing program P comprises a program code stored on a medium, which is readable on the computer, for causing the control unit 200 to perform the method steps of; providing a forming tool; providing a skin lay-up onto the forming tool; positioning a stiffener lay-up and a fastener lay-up to the skin lay-up forming an integrated lay-up; co-curing the integral lay-up; and mounting a coupling member 12 to the stiffener element and the fastener element.

The data medium storing program P further may be stored in a separate memory 960 and/or in a read/write memory 950. The data medium storing program P is in this embodiment stored in executable or compressed data format.

It is to be understood that when the processing unit 910 is described to execute a specific function this involves that the processing unit 910 executes a certain part of the program stored in the separate memory 960 or a certain part of the program stored in the read/write memory 950.

The processing unit 910 is associated with a data port 999 for communication via a first data bus 915. The non-volatile memory NVM 920 is adapted for communication with the processing unit 910 via a second data bus 912. The separate memory 960 is adapted for communication with the processing unit 910 via a third data bus 911. The read/write memory 950 is adapted to communicate with the processing unit 910 via a fourth data bus 914. The data port 999 is preferably connectable to e.g. data links L201, L202, L203, L204 of the production line shown in Figs. 2a, 2b, 2c, 2d, 2e.

When data is received by the data port 999, the data will be stored temporary in the second memory unit 940. After that the received data is temporary stored, the processing unit 910 will be ready to execute the program code, according to the above-mentioned procedure. Preferably, the signals (received by the data port 999) comprise information about operational status of the production line 19, such as operational status regarding the ATL performance for producing the proper lay-up in correspondence with designer drawings. It could also be operational data regarding the positioning of the lay-ups relatively the forming tools and the monitoring of such positioning. According to one aspect signals received by the data port 999 may contain information about curing temperature and over pressure of the autoclave. The received signals at the data port 999 can be used by the device 900 for controlling and monitoring a semi-automatic or automatic production line 19 for manufacture of manufacture of the torsion-box type skin composite structure 1 mountable to a main sub-structure 5 in a cost-effective way. The signals received by the data port 999 can be used for automatically moving and mounting the coupling member 12 into position for adherence to the structure in the production line 19 by means of robot arms. The information is preferably measured by means of suitable sensor members arranged in each automatic apparatus of the production line 19. The information can also be manually fed to the control unit 200 via a suitable communication device, such as a personal computer display.

Parts of the methods can also be executed by the device 900 by means of the processing unit 910, which processing unit 910 runs the data medium storing program P being stored in the separate memory 960 or the read/write memory 950. When the device 900 runs the data medium storing program P, the method steps disclosed herein will be executed.

Fig. 10 schematically illustrates an aircraft 80 comprising a torsion-box type skin composite structure 1 according to the invention. In this case the structure 1 is part of an airfoil (wing) of the aircraft 80.

The present invention is of course not in any way restricted to the preferred embodiments described above, but many possibilities to modifications, or combinations of the described embodiments, thereof should be apparent to a person with ordinary skill in the art without departing from the basic idea of the invention as defined in the appended claims.

The lay-up can be applied in different ways, having different fiber orientations in each ply, and may have a fiber mat which is infused with resin. The lay-ups may comprise a pre-preg tape such as unidirectional pre-impregnated fiber plies, fibers being of woven carbon fiber pre-preg fabrics or glass, Kevlar, spectra pre-preg tapes and fabrics etc. Thereby a laminate stack can be built by means of an ATL-apparatus, which is cost-effective. Examples of suitably composite materials include carbon fibers, aramid fibers, glass fibers, combinations of carbon and glass fibers or combinations of carbon, aramid and glass fibers. The skins and the substructure may be provided by laminating multiple sheets or layers having the fibers of respective sheet oriented in different directions. Each skin ply may comprise large fibers, such as carbon fibers, graphite fibers and/or carbon nano tubes oriented in different directions. For example, a ply with span wise oriented carbon fibers could be laid onto and adjacent a ply with chord wise oriented carbon fibers and upon this one a further ply having 45 degrees oriented fibers relative the span wise direction. Each ply can also comprise large fibers and/or carbon nano tubes or the like. The laminate materials may be achieved by resin transfer moulding (RTM) in an automated operation that combines compression, moulding, and transfer moulding processes. The mould may be loaded with layers of dry fibers and the resin being injected or drawn into the mould. Some of the elongated reinforcement fiber-like elements are oriented transverse to the laminate surface. The resin is heated and pressure is applied. After curing, the structure is removed, trimmed, ID-marked and stored.

The coupling members may have different forms, such as L-formed, T-formed, U-formed and other forms. They can be made of metal, but suitably of composite.

The definition of herein regarding the term "composite" means a plastic material being reinforced with fiber like material and the composite may comprise several plies with different fiber orientations.

## Claims

1. A method for manufacture of an airfoil according to claim 7, the method comprises the step of:
- providing a forming tool (27, 31, 41);
- providing a skin lay-up (23) onto the forming tool (27, 31);
- positioning a stringer lay-up (37) and a rib foot lay-up (39) to the skin lay-up (23) for forming an integral lay-up (43);
- co-curing the integral lay-up (43); and
- mounting the coupling member (12, 12') to the stringer (9) and the rib foot (11), wherein two coupling members (12) being mounted to one rib foot (11) in such a way that the rib foot (11) is rigidly held between two adjacent stringers (9).

2. The method according to claim 1, wherein the step of positioning the stringer (37) and the rib foot lay-up (39) is performed after forming said stringer (37) and said rib foot lay-ups (39) over a box tool (41, 41', 41", 41''').

3. The method according to claim 1 or 2, wherein the step of positioning the stringer (37) and the rib foot lay-up (39) to the skin lay-up (23) is made after the application of an adhesive.

4. The method according to claim 3, wherein said adhesive comprises fiber-like reinforcement elements.

5. The method according to any of the preceding claims, wherein the step of co-curing the integrated lay-up (43) is made in an autoclave (45).

6. The method according to any of the preceding claims, wherein the step of mounting the coupling member (12) to the stringer (9) and the rib foot (11) comprises the application of an adhesive between the stringer (9) and the rib foot (11) and the coupling member (12).

7. An airfoil comprising a rib (8) and a torsion-box type skin composite structure (1) mounted to the rib (8) the torsion-box type skin composite structure (1) comprises a skin component (7) bonded with a stringer (9) and with a rib foot (11) for bonding the torsion-box type skin composite structure (1) to the rib (5), **characterized by** the rib foot (11 and the stringer (9) being co-cured with the skin component (7); a coupling member (12) being rigidly mounted to the stringer (9) and the rib foot (11), wherein two coupling members (12) being mounted to one rib foot (11) in such a way that the rib foot (11) is rigidly held between two adjacent stringers (9).

8. The airfoil according to claim 7, **wherein** the coupling member (12) comprises an adhesive and/or a fastening member.

9. The airfoil according to claim 8, **wherein** the fastening member comprises bolts (70).

10. The airfoil according to any of claims 7 to 9, **wherein** the coupling member (12) exhibits a web part (57') and a flange part (FL) extending orthogonally over the web part (57').

11. The airfoil according to claim 10, **wherein** the web part (57') comprises a bore hole (67) for mounting a fastening member (70) through the bore hole to rigidly connect the rib foot (11) to the rib (5) by rigidly connection of the flange part (FL) to the stringer (9).

12. An aircraft wing comprising an airfoil according to any of the preceding claims 7-11, **wherein** the torsion-box type skin composite structure (1) is bolted to the rib (8)

## Patentansprüche

1. Verfahren zur Herstellung eines Tragflächenprofils nach Anspruch 7, welches Verfahren die folgenden Schritte umfasst:
- Bereitstellen eines Formwerkzeugs (27, 31, 41);
- Bereitstellen einer Hautauflage (23) auf dem Formwerkzeug (27, 31);
- Positionieren einer Stringerauflage (37) und einer Rippenfußauflage (39) an der Hautauflage (23) zum Bilden einer integralen Auflage (43);
- Co-Härten der integralen Auflage (43); und
- Montieren des Kopplungselements (12, 12') am Stringer (9) und am Rippenfuß (11), wobei zwei Kopplungselemente (12) auf einem Rippenfuß (11) montiert sind, so dass der Rippenfuß (11) zwischen zwei benachbarten Stringern (9) starr gehalten wird.

2. Verfahren nach Anspruch 1, wobei der Schritt des Positionierens der Stringerauflage (37) und der Rippenfußauflage (39) nach dem Formen der Stringerauflage (37) und der Rippenfußauflage (39) über ein Kastenwerkzeug (41, 41', 41", 41''') durchgeführt wird.

3. Verfahren nach Anspruch 1 oder 2, wobei der Schritt des Positionierens der Stringerauflage (37) und Rippenfußauflage (39) an der Hautauflage (23) nach dem Aufbringen eines Klebstoffs erfolgt.

4. Verfahren nach Anspruch 3, wobei der Klebstoff faserartige Verstärkungselemente umfasst.

5. Verfahren nach einem der vorhergehenden Ansprüche, wobei der Schritt des Co-Härtens der integralen Auflage (43) in einem Autoklav (45) erfolgt.

6. Verfahren nach einem der vorgehenden Ansprüche, wobei der Schritt des Montierens des Kopplungselements (12) am Stringer (9) und am Rippenfuß (11) die Aufbringung eines Klebstoffs zwischen dem Stringer (9) und dem Rippenfuß (11) und dem Kopplungselement (12) umfasst.

7. Tragflächenprofil umfassend eine Rippe (8) und eine torsionskastenartige Hautverbundstruktur (1), die auf der Rippe (8) montiert ist, wobei die torsionskastenartige Hautverbundstruktur (1) einen Hautbestandteil (7) umfasst, der mit einem Stringer (9) und mit einem Rippenfuß (11) zum Binden der torsionskastenartigen Hautverbundstruktur (1) an der Rippe (5) gebunden ist, **dadurch gekennzeichnet, dass** der Rippenfuß (11) und der Stringer (9) mit dem Hautbestandteil (7) co-gehärtet sind; wobei ein Kopplungselement (12) am Stringer (9) und am Rippenfuß (11) starr montiert ist, wobei zwei Kopplungselemente (12) an einem Rippenfuß (11) derart montiert sind, dass der Rippenfuß (11) zwischen zwei benachbarten Stringern (9) starr gehalten wird.

8. Tragflächenprofil nach Anspruch 7, wobei das Kopplungselement (12) einen Klebstoff und/oder ein Befestigungselement umfasst.

9. Tragflächenprofil nach Anspruch 8, wobei das Befestigungselement Bolzen (70) umfasst.

10. Tragflächenprofil nach einem der Ansprüche 7 bis 9, wobei das Kopplungselement (12) einen Stegteil (57') und einen Flanschenteil (FL), der sich orthogonal über den Stegteil (57') erstreckt, aufweist.

11. Tragflächenprofil nach Anspruch 10, wobei der Stegteil (57') ein Bohrloch (67) umfasst zum Montieren eines Befestigungselements (70) durch das Bohrloch zum starren Verbinden des Rippenfußes (11) mit der Rippe (5) durch starres Verbinden des Flanschenteils (FL) mit dem Stringer (9).

12. Flugzeugflügel umfassend ein Tragflächenprofil nach einem der vorhergehenden Ansprüche 7 bis 11, wobei die torsionskastenartige Hautverbundstruktur (1) an der Rippe (8) verbolzt ist.

## Revendications

1. Procédé de fabrication d'un profil aérodynamique selon la revendication 7, le procédé comprenant les étapes consistant à :
- fournir un outil de formage (27, 31, 41) ;
- fournir une couche de peau (23) sur l'outil de formage (27, 31) ;
- positionner une couche de montant (37) et une couche de pied de nervure (39) à la couche de peau (23) pour former une couche intégrale (43) ;
- co-durcir la couche intégrale (43) ; et
- monter l'élément de couplage (12, 12') au montant (9) et au pied de nervure (11), les deux éléments de couplage (12) étant montés sur l'un pied de nervure (11) d'une telle façon que le pied de nervure (11) est retenu rigidement entre deux montants (9) adjacents.

2. Procédé selon la revendication 1, dans lequel l'étape consistant à positionner le montant (37) et la couche de pied de nervure (39) est effectuée après la formation dudit montant (37) et desdites couches de pied de nervure (39) au-dessus d'un outil de boîte (41, 41', 41", 41''').

3. Procédé selon la revendication 1 ou 2, dans lequel l'étape consistant à positionner le montant (37) et la couche de pied de nervure (39) à la couche de peau (23) est réalisée après l'application d'un adhésif.

4. Procédé selon la revendication 3, dans lequel ledit adhésif comprend des éléments de renforcement analogues à des fibres.

5. Procédé selon l'une quelconque des revendications précédentes, dans lequel l'étape de co-durcissement de la couche intégrale (43) est réalisée dans un autoclave (45).

6. Procédé selon l'une quelconque des revendications précédentes, dans lequel l'étape consistant à monter l'élément de couplage (12) au montant (9) et au pied de nervure (11) comprend l'application d'un adhésif entre le montant (9) et le pied de nervure (11) et l'élément de couplage (12).

7. Profil aérodynamique comprenant une nervure (8) et une structure composite de peau du type à boîte de torsion (1) montée sur la nervure (8), la structure composite de peau du type à boîte de torsion (1) comprenant un composant de peau (7) lié à un montant (9) et avec un pied de nervure (11) pour lier la structure composite de peau du type à boîte de torsion (1) à la nervure (5), **caractérisé en ce que** le pied de nervure (11) et le montant (9) sont co-durcis avec le composant de peau (7) ; un élément de couplage (12) étant monté rigidement sur le montant (9) et le pied de nervure (11), deux éléments de couplage (12) étant montés sur un pied de nervure (11) d'une telle façon que le pied de nervure (11) est retenu rigidement entre deux montants (9) adjacents.

8. Profil aérodynamique selon la revendication 7, **dans lequel** l'élément de couplage (12) comprend un adhésif et / ou un élément de fixation.

9. Profil aérodynamique selon la revendication 8, **dans lequel** l'élément de fixation comprend des boulons (70).

10. Profil aérodynamique selon l'une quelconque des revendications 7 à 9, **dans lequel** l'élément de couplage (12) présente une partie en bande (57') et une partie de bride (FL) s'étendant orthogonalement sur la partie en bande (57').

11. Profil aérodynamique selon la revendication 10, **dans lequel** la partie en bande (57') comprend un trou de forage (67) pour monter un élément de fixation (70) à travers le trou de forage pour relier rigidement le pied de nervure (11) à la nervure (5) en reliant rigidement la partie de bride (FL) au montant (9).

12. Aile d'avion comprenant un profil aérodynamique d'une structure composite de peau du type à boîte de torsion selon l'une quelconque des revendications précédentes 7 à 11, **dans laquelle** la structure composite de peau du type à boîte de torsion (1) est boulonnée à la nervure (8).
